# EUROPEAN PATENT SPECIFICATION

(11) **EP 2 334 184 B1**
(45) Date of publication and mention of the grant of the patent: **13.01.2016**
(21) Application number: 09778890.5
(22) Date of filing: 14.10.2009
(51) Int. Cl.: A01N 43/653, A01N 43/40, A01P 3/00

(54) **FUNGICIDAL MIXTURE, CONTAINING FENPROPIDIN AND PENCONAZOLE**
FUNGIZIDE MISCHUNG, FENPROPIDIN UND PENCONAZOL ENTHALTEND
COMPOSITION FONGICIDE CONTENANT FENPROPIDIN ET PENCONAZOLE

(30) Priority: 15.10.2008 GB 0818906
(43) Date of publication of application: 22.06.2011
(73) Proprietor: Syngenta Participations AG, 4058 Basel (CH)
(72) Inventor: BREEDEVELD, Marcel, Eduard, 4611 AP Bergen Op Zoom (NL); MOSTERT, Jan, Adrianus, 4611 AP Bergen Zoom (NL); RIJKERS, Christianus, Antonius, Engelbertus, 4611 AP Bergen Op Zoom (NL); QUEROL, Thierry, Manuel, Claude, Basel (CH)
(74) Representative: Syngenta International AG
(86) International application number: PCT/EP2009/007378
(87) International publication number: WO 2010/043389

(56) References cited:
- EP-A1- 0 235 082
- EP-A1- 0 425 857
- WO-A1-97/06686
- WO-A1-03/073850
- DE-A1- 3 736 651
- "penconazole" In: "The e-Pesticide Manual version 4.0" July 2006 (2006-07), BCPC-British Crop Protection Council , XP007911231 ISBN: 1901396428 Entry 638, Title Uses
- L. WILLOCQUET ET AL: 'Effects of radiation, especially ultraviolet B, on conidial germination and mycelial growth of grape powdery mildew' EUROPEAN JOURNAL OF PLANT PATHOLOGY, [Online] 01 January 1995, pages 441 - 449, XP055042303 DOI: 10.1007/BF01877138 Retrieved from the Internet: <URL:http://rd.springer.com/article/10.1007 /BF01877138> [retrieved on 2012-10-25]
- E. LAHOZ ET AL: 'Efficacy of rue extract, sodium bicarbonate and fungicides at reduced rates to control of powdery mildew' IL TABACCO, [Online] 25 March 2005, pages 57 - 65, XP055042337 Retrieved from the Internet: <URL:http://www1.inea.it/ist/9pdf/ue22ing1. pdf> [retrieved on 2012-10-26]
- ROBIN CURRIE: 'The chemical control of Rhododendron powdery mildew', [Online] 01 April 1997, 1997 HORTICULTURAL DEVELOPMENT COUNCIL, XP055042347 Retrieved from the Internet: <URL:http://www.hdc.org.uk/sites/default/fi les/research_papers/HNS 64 Final Report.pdf> [retrieved on 2012-10-26]
- R. A. SINGH ET AL: 'Superiority of penconazole in management of pea powdery mildew caused by Erisiphe pisi.' INDIAN JOURNAL OF AGRICULTURAL SCIENCES vol. 70, no. 10, 01 January 2000, pages 703 - 704, XP055042340 ISSN: 0019-5022
- 'Powdery Mildew on Ornamentals' PEST NOTES, [Online] 01 April 2009, INTERNET, pages 1 - 4, XP055042345 Retrieved from the Internet: <URL:http://www.ipm.ucdavis.edu/PDF/PESTNOT ES/pnpowderymildewornamentals.pdf> [retrieved on 2012-10-26]

## Description

The present invention relates to a method for controlling powdery mildew on ornamental and/or vegetable plants without causing phytotoxicity to the plants, comprising applying a composition comprising fenpropidin and penconazole to the plants in a fungicidally effective amount. It also relates to a synergistic fungicidal composition comprising fenpropidin and penconazole.

Powdery mildew is one of the most common diseases in crops grown in greenhouses. It reduces the aesthetic value and saleability of the diseased plants. Powdery mildew is a class of diseases that is recognised by a white talcum-like growth, usually starting on the upper leaf surface. It may be caused by a variety of different fungal species such as *Erysiphe, Leveillula, Microsphaera, Sphaerotheca* and *Plasmopara.* Some of these species are host specific, for example, *Sphaerotheca pannosa* mainly infects roses, *Plasmopara viticola* infects grapevines, *Leveillula taurica* infects peppers, and *Sphaerotheca fuliginea* infects cucurbit crops. Many ornamental and vegetable crops are susceptible to powdery mildew, including African violet, begonia, dahlia, gerbera daisy, hydrangea, verbena, roses, kalanchoe, poinsettia, aster, centaurea, coreopsis, delphinium, monarda, phlox, rudbeckia, sedum, azalea, rosemary, sage, St. Johnswort, mint, tomatoes, sweet pepper and cucumbers. It is therefore desirable to develop an effective formulation to control powdery mildew and other diseases on ornamental and vegetable crops.

A number of chemical fungicides are commercially available for the control of diseases on ornamentals, such as penconazole (Topas™), myclobutanil (Systhane™), mancozeb (Dithane M-45™), dodemorph (Meltatox™), and sulphur dust (Cosan™).

EP0235082 discloses combinations of fenpropidine and propiconazole to be used against *Erisiphae graminis* on wheat.

EP0425857 discloses synergistic mixtures of the fungicides fenpropimorph with epoxiconazole on powdery mildew caused by Erysiphe graminis var. tritici on a particular sort of wheat.

The entry "penconazole" in "the e-Pesticide Manual version 4.0, July 2006 (2006-07), BCPC-British Crop Protection Council" discloses the use of penconazole to control powdery mildew on fruits, and Ascomycetes, Basidiomycetes, and Deuteromycetes on vines, stone fruits, ornamentals and vegetables, like demonstrated in the articles from E. Lahoz et al., "Efficacy of rue extract, sodium bicarbonate and fungicides at reduced rates to control of powdery mildew" II Tabacco, 25 March 2005, pages 57-65 ; Robin Currie et al., "The Chemical control of Rhododendron powdery mildew", 1st April 1997 Horticultural Development Council; R. A Singh et al., "Superiority of penconazole in management of pea powedery mildew caused by Erisiphe pisi.", Indian Jounral Of Agricultural Sciences, Vol 70 no. 10, 1st January 2000, pages 703-704.

WO03/073850, WO97/06686 and DE3736651 disclose the combination of fenpropidine to other triazole fungicides to fight fungal infections.

The article from L. Willocquet et al., "effects of radiation, especially ultraviolet B, on conidial germination and mycelial growth of grape powdery mildew", European Journal of Plant Pathology, 1st January 1995, pages 441-449 discloses the effect of radiations on grape downey mildew caused by *Uncinula necator, and the article "*Powdery mildew on ornamentals" from Pest notes, 1st April 2009, pages 1-4 *discloses cultural practice to combat downey mildews consisting in locating plants in sunny areas as much as possible.*

Despite existing chemical control products, powdery mildew on ornamentals, especially roses, remains a major problem. For example, it causes significant losses in the number of roses grown that are suitable for sale, and hence reduces profitability for growers and retailers alike. In addition to those listed above, bupirimate (Nimrod™), triflumizol (Rocket™), boscalid and kresoxym methyl (Collis™) and azoxystrobin (Ortiva™) are also for control of powdery mildew control on roses. However, there exists a need for an improved fungicide composition that controls powdery mildew on ornamental and vegetable crops more effectively. In particular, there is a need for an improved fungicide composition for effective control of powdery mildew (*Sphaerotheca paanosa*) on roses without causing phytotoxicity to the roses.

Surprisingly, it has been found that mixtures of fenpropidin and penconazole are particularly effective at controlling *Sphaerotheca pannosa* on roses. In particular, it has been found that such mixtures have a synergistic effect, providing quicker, better and longer-lasting activity than the person skilled in the art would expect given the activity of each fungicide when applied alone.

It has been observed that mixtures of fenpropidin and penconazole can have a phytotoxic effect on roses. Surprisingly, it has been found that mixtures of fenpropidin and penconazole can be applied to roses growing under high light intensity without causing phytotoxic effects.

Fenpropidin is mainly a cereal fungicide, and is not currently used on ornamentals. The chemical name for fenpropidin is (±)-1-[3-[4-(1,1-dimethylethyl)phenyl]-2-methylpropyl]piperidine, and its structure may be represented as:

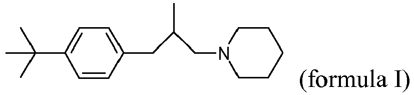

Penconazole is routinely used on ornamental crops. The chemical name for penconazole is 1-[2-(2,4-dichlorophenyl)pentyl]-1*H*-1,2,4-triazole, and its structure may be represented as:

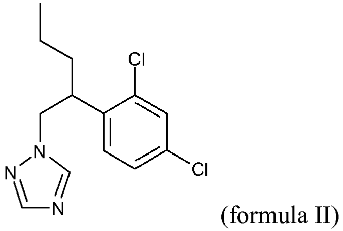

Fenpropidin is phytotoxic to certain ornamental species, such as roses. However, it has been found that a surprisingly low rate of fenpropidin is effective for powdery mildew control on ornamental plants when it is used in combination with penconazole, without causing phytotoxicity to the plants. Typically the rate of fenpropidin is about 5 times less than when it is used in cereal crops.

Canadian patent application number CA-2178655 discloses slow-release fungicidal compositions containing fenpropidin or penconazole. The document entitled "fungizide Kombinationspraeparate" published in Research Disclosure, Vol. 264, 04 1986, p. 172 discloses that the fungicidal activity of fenpropidin can be improved by combining it with at least one other fungicide, such as an azole. The document entitled "fungizide Kombinationspraeparate" published in Research Disclosure, Vol. 307, 11 1989, p. 781, discloses that the spectrum of fungicidal activity of fenpropidin and/or fenpropimorph can be extended by formulating it with another fungicide. However, none of these documents disclose methods for controlling powdery mildew on ornamentals or vegetables, especially roses, using mixtures of fenpropidin and penconazole.

According to the present invention there is provided a method for controlling powdery mildew on ornamental and/or vegetable plants without causing phytotoxicity to the plants, comprising applying a composition comprising fenpropidin at a rate of between 100mg/L and 300mg/L and penconazole at a rate of between 20mg/L and 100mg/L to the plants, wherein the plants are growing in conditions having an average of at least 2000 W/m² total light radiation per day and/or an average light intensity of at least 10,000 lux.

The total light radiation level, measured in Watts / metre² is a measure of the total amount of light radiation during a 24 hour period. During the winter months in Holland, the average total light radiation level is 1,000 to 2,000 W/m² per day; in the summer months, it is 4,500 W/m² per day. Kenya, Colombia and Ecuador have an average total light radiation level of around 4,000 (rainy season) to 5,000 (rest of year) W/m² per day.

Suitably, the plants are grown in conditions having an average of at least 2,500 W/m² total light radiation per day. More suitably, the plants are grown in conditions having an average of at least 3,000 W/m² total light radiation per day. More suitably still, the plants are grown in conditions having an average of at least 3,500 W/m² total light radiation per day. More suitably, the plants are grown in conditions having an average of at least 4,000 W/m² total light radiation per day.

Lux is used as a measure of illuminance (the intensity of light hitting a surface): one lux is one lumen per metre². Illuminance on an overcast day is typically around 1,000 lux; in full daylight (but not direct sun) is around 10,000 - 25,000 lux; and in direct sunlight is from 32,000 to 130,000 lux. Lighting in modern day glasshouses for roses typically gives a light intensity of around 6,000 to 9,000 lux: higher light intensities are possible, but are usually limited by cost.

Suitably, the plants are grown in conditions in which the average light intensity during "daylight" hours (including any period of artificial lighting) is at least 12,000 lux. More suitably, the plants are grown in conditions in which the average light intensity is at least 15,000 lux. More suitably still, the plants are grown in conditions in which the average light intensity is at least 18,000 lux. More suitably, the plants are grown in conditions in which the average light intensity is at least 20,000 lux.

Surprisingly, the level of total light radiation and/or light intensity has been found to be important in the use of mixtures of fenpropidin and penconazole for effectively controlling disease on plants without causing phytotoxicity. Phytotoxicity is observed when the mixture is applied to plants grown in conventional glasshouses, where the light radiation and/or light intensity is low, even taking into account any artificial lighting. In contrast, no phytotoxicity is observed when the mixture is applied to plants grown in Kenya, Colombia, Ecuador, or in Europe in summer months, where the light radiation and/or light intensity is high.

The relevant growing conditions with respect to the total light radiation and/or light intensity, are those at the time of treatment of the plants.

The term "controlling" refers to both preventative and curative properties. For example, it includes preventing disease infestation, protecting plants from disease infestation, delaying the onset of disease infestation, slowing the spread of disease, and combating or killing disease.

The term "without causing phytotoxicity" means without significant crop safety issues that could result in deterioration in quality, or non-commercial viability of the crop.

The term "average" refers to the mathematical mean over a period of time.

According to the present invention, there is also provided a synergistic fungicidal composition comprising fenpropidin at a rate of between 100mg/L and 300mg/L and penconazole at a rate of between 20mg/L and 100mg/L.

The composition of the present invention is particularly effective at controlling *Sphaerotheca pannosa* on roses. It results in faster control of *Sphaerotheca pannosa,* more effective control of *Sphaerotheca pannosa,* and longer-lasting control of *Sphaerotheca pannosa* than existing commercially available fungicides.

Suitably, the composition of the present invention comprises fenpropidin and penconazole present in a weight ratio of from about 1:10 to about 10:1. More suitably, fenpropidin and penconazole are present in the composition in a weight ratio of from about 1:2 to about 1:6. More suitably still, fenpropidin and penconazole are present in the composition in a weight ratio of between about 1:2 and 1:3. Most suitably, fenpropidin and penconazole are present in the composition in a weight ratio of about 1:2.6.

A reduced rate of fenpropidin may be required for powdery mildew control on plant species that are more sensitive, and to which fenpropidin may be phytotoxic. Suitably, fenpropidin is present in the composition at a rate of between 100mg/L and 300mg/L. More suitably, fenpropidin is present in the composition at a rate of between 100mg/L and 50mg/L. More suitably still, fenpropidin is present in the composition at a rate of 131mg/L.

Suitably, penconazole is present in the composition at a rate of between 20mg/L and 100mg/L. More suitably, penconazole is present in the composition at a rate of between 40mg/L and 60mg/L. More suitably still, penconazole is present in the composition at a rate of 50mg/L.

Most suitably, the composition comprises 131 mg/L fenpropidin and 50mg/L penconazole.

The compositions and/or methods of the present invention may be used to control powdery mildew on any ornamental and/or vegetable crops, including flowers, shrubs, broad-leaved trees and evergreens. For example the invention may be used on any of the following ornamental species: *Ageratum* spp., *Alonsoa* spp., *Anemone* spp., *Anisodontea capsenisis, Anthemis* spp., *Antirrhinum* spp., *Aster* spp., *Begonia* spp. (e.g. *B. elatior, B. semperflorens, B. tubereux*), *Bougainvillea* spp., *Brachycome* spp., *Brassica* spp. (ornamental), *Calceolaria* spp., *Capsicum annuum, Catharanthus roseus, Canna* spp., *Centaurea* spp., *Chrysanthemum* spp., *Cineraria* spp. (*C*. *maritime*), *Coreopsis* spp., *Crassula coccinea, Cuphea ignea, Dahlia* spp., *Delphinium* spp., *Dicentra spectabilis, Dorotheantus* spp., *Eustoma grandiflorum, Forsythia* spp., *Fuchsia* spp., *Geranium gnaphalium, Gerbera* spp., *Gomphrena globosa, Heliotropium* spp., *Helianthus* spp., *Hibiscus* spp., *Hortensia* spp., *Hydrangea* spp., *Hypoestes phyllostachya, Impatiens* spp. (*I. Walleriana*), *Iresines* spp., *Kalanchoe* spp., *Lantana camara, Lavatera trimestris, Leonotis leonurus, Lilium* spp., *Mesembryanthemum* spp., *Mimulus* spp., *Monarda* spp., *Nemesia* spp., *Tagetes* spp., *Dianthus* spp. (carnation), *Canna* spp., *Oxalis* spp., *Bellis* spp., *Pelargonium* spp. *(P. peltatum, P. Zonale), Viola* spp. (pansy), *Petunia* spp., *Phlox* spp., *Plecthranthus* spp., *Poinsettia* spp., *Parthenocissus* spp. *(P. quinquefolia, P. tricuspidata), Primula* spp., *Ranunculus* spp., *Rhododendron* spp., *Rosa* spp. (rose), *Rudbeckia* spp., *Saintpaulia* spp., *Salvia* spp., *Scaevola aemola, Schizanthus wisetonensis, Sedum* spp., *Solanum* spp., *Surfinia* spp., *Tagetes* spp., *Nicotinia* spp., *Verbena* spp., *Zinnia* spp. and other bedding plants.

For example the invention may be used on any of the following vegetable species: *Allium* spp. (*A. sativum, A.. cepa, A. oschaninii, A. Porrum, A. ascalonicum, A. fistulosum), Anthriscus cerefolium, Apium graveolus, Asparagus officinalis, Beta vulgarus, Brassica* spp. (*B. Oleracea, B. Pekinensis, B. rapa), Capsicum annuum, Cicer arietinum, Cichorium endivia, Cichorum* spp. (*C. intybus, C. endivia*)*, Citrillus lanatus, Cucumis* spp. (*C. sativus, C. melo), Cucurbita* spp. (*C. pepo, C. maxima*)*, Cyanara* spp. (*C. scolymus, C. cardunculus), Daucus carota, Foeniculum vulgare, Hypericum* spp., *Lactuca sativa, Lycopersicon* spp. (*L. esculentum, L. lycopersicum), Mentha* spp., *Ocimum basilicum, Petroselinum crispum, Phaseolus* spp. (*P. vulgaris, P. coccineus*)*, Pisum sativum, Raphanus sativus, Rheum rhaponticum, Rosemarinus* spp., *Salvia* spp., *Scorzonera hispanica, Solanum melongena, Spinacea oleracea, Valerianella* spp. (*V. locusta, V. eriocarpa*) and *Vicia faba.*

Suitably, the present invention is used to control powdery mildew on one or more crops selected from the group consisting of African violet, *Begonia, Dahlia, Gerbera, Hydrangea, Verbena, Rosa, Kalanchoe, Poinsettia, Aster, Centaurea, Coreopsis, Delphinium, Monarda, Phlox, Rudbeckia, Sedum, Petunia, Viola, Impatiens, Geranium, Chrysanthemum, Ranunculus, Fuchsia, Salvia, Hortensia*, rosemary, sage, St. Johnswort, mint, sweet pepper, tomato and cucumber. Most suitably, it is used to control powdery mildew (*Sphaerotheca pannosa*) on roses.

In one embodiment, the active ingredients in the composition of the present invention consist essentially of fenpropidin and penconazole. In a further embodiment, the active ingredients in the composition of the present invention consist of fenpropidin and penconazole.

In still further embodiment, the composition of the present invention may comprise one or more further fungicides, in addition to fenpropidin and penconazole. This may be useful to expand the spectrum of diseases that will be controlled through application of the composition, or as a resistance management tool. Any suitable fungicides may be used in the composition - a complete list of suitable fungicides can be found in The Pesticide Manual (14^{th} edition, ed. C.D.S. Tomlin). For example, additional fungicides may include one or more of azoxystrobin, bitertanol, bixafen, boscalid, carboxin, Cu₂O, cymoxanil, cyproconazole, cyprodinil, dichlofluamid, difenoconazole, diniconazole, epoxiconazole, fenpiclonil, fenpropimorph, fludioxonil, fluopyram, fluoxastrobin, fluquiconazole, flusilazole, flutriafol, furalaxyl, guazatin, hexaconazole, hymexazol, imazalil, imibenconazole, ipconazole, isopyrazam, kresoxim-methyl, mancozeb, metalaxyl, mefenoxam, metconazole, myclobutanil, oxadixyl, pefurazoate, pencycuron, penflufen, penthiopyrad, prochloraz, propiconazole, pyroquilone, (±)-*cis*-1-(4-chlorophenyl)-2-(1*H*-1,2,4-triazol-1-yl)cycloheptanol, spiroxamin, tebuconazole, thiabendazole, tolifluamide, triazoxide, triadimefon, triadimenol, trifloxystrobin, triflumizole, triticonazole, uniconazole, isoprothiolone, carpropamid, thifluzamide, tiadinil, probenazole, diclocymet, furametpyr and orysastrobin. Particularly suitable additional fungicides include azoxystrobin, difenoconazole, fludioxonil, thiabendazole, tebuconazole, metalaxyl, mefenoxam, fenpropimorph, fluoxastrobin, tritaxonazole and trifloxystrobin.

The fungicidal compounds of the present invention may be applied either simultaneously or sequentially. If administered sequentially, the compounds may be administered in any order in a suitable timescale, for example, with no longer than 24 hours between the time of administering the first compound and the time of administering the last compound. Suitably, both fenpropidin and penconazole are administered within a timescale of a few hours, such as one hour. If the components are administered simultaneously, they may be administered separately or as a tank mix or as a pre-formulated mixture of all the components or as a pre-formulated mixture of some of the components tank mixed with the remaining components.

The compositions of the invention are applied as a formulation containing various adjuvants and carriers known to or used in the industry. The compositions of the invention may be formulated, for example, as granules wettable powders, emulsifiable concentrates, powders or dusts, flowables, solutions, suspensions or emulsions, or as controlled release forms such as microcapsules. These formulations may contain as little as 0.5% to as much as 95% or more by weight of active ingredient. The optimum amount for any given compound will depend on formulation, application equipment and nature of the plants to be controlled. Suitably, the composition of the present invention is an aqueous formulation such as a solution of emulsion, or is a solid formulation that can be readily dissolved in water to form a liquid formulation for spray application. Alternatively, the composition may be applied using any conventional application technique, including mist, drench, fog and smoke application.

Wettable powders are in the form of finely divided particles which disperse readily in water or other liquid carriers. The particles contain the active ingredient retained in a solid matrix. Typical solid matrices include fuller's earth, kaolin clays, silicas and other readily wet organic or inorganic solids. Wettable powders normally contain 5% to 95% of the active ingredient plus a small amount of wetting, dispersing or emulsifying agent.

Emulsifiable concentrates are homogeneous liquid compositions dispersible in water or other liquid and may consist entirely of the active compound with a liquid or solid emulsifying agent, or may also contain a liquid carrier, such as xylene, heavy aromatic naphthas, isophorone and other non-volatile organic solvents. In use, these concentrates are dispersed in water or other liquid and normally applied as a spray to the area to be treated. The amount of active ingredient may range from 0.5% to 95% of the concentrate.

Microcapsules are typically droplets or granules of the active material enclosed in an inert porous shell which allows escape of the enclosed material to the surroundings at controlled rates. Encapsulated droplets are typically about 1 to 50 microns in diameter. The enclosed liquid typically constitutes 50 to 95% of the weight of the capsule and may include solvent in addition to the active compound. Shell or membrane materials include natural and synthetic rubbers, cellulosic materials, styrene-butadiene copolymers, polyacrylonitriles, polyacrylates, polyesters, polyamides, polyureas, polyurethanes and starch xanthates.

Other useful formulations for fungicidal applications include simple solutions of the active ingredients in a solvent in which it is completely soluble at the desired concentration, such as acetone, alkylated naphthalenes, xylene and other organic solvents. Pressurised sprayers, wherein the active ingredients are dispersed in finely-divided form as a result of vaporisation of a low boiling dispersant solvent carrier, may also be used.

Many of the formulations described above include wetting, dispersing or emulsifying agents. Examples are alkyl and alkylaryl sulphonates and sulphates and their salts, polyhydric alcohols; polyethoxylated alcohols, esters, silicons and fatty amines. These agents, when used, normally comprise from 0.1% to 15% by weight of the formulation.

Suitable agricultural adjuvants and carriers that are useful in formulating the compositions for use in the invention in the formulation types described above are well known to those skilled in the art. Suitable examples of liquid carriers that can be employed include water, toluene, xylene, petroleum naphtha, crop oil, acetone, methyl ethyl ketone, cyclohexanone, acetic anhydride, acetonitrile, acetophenone, amyl acetate, 2-butanone, chlorobenzene, cyclohexane, cyclohexanol, alkyl acetates, diacetonalcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethyl formamide, dimethyl sulfoxide, 1,4-dioxane, dipropylene glycol, dipropylene glycol methyl ether, dipropylene glycol dibenzoate, diproxitol, alkyl pyrrolidinone, ethyl acetate, 2-ethyl hexanol, ethylene carbonate, 1,1,1-trichloroethane, 2-heptanone, alpha pinene, d-limonene, ethylene glycol, ethylene glycol butyl ether, ethylene glycol methyl ether, gamma-butyrolactone, glycerol, glycerol diacetate, glycerol monoacetate, glycerol triacetate, hexadecane, hexylene glycol, isoamyl acetate, isobornyl acetate, isooctane, isophorone, isopropyl benzene, isopropyl myristate, lactic acid, laurylamine, mesityl oxide, methoxy-propanol, methyl isoamyl ketone, methyl isobutyl ketone, methyl laurate, methyl octanoate, methyl oleate, methylene chloride, m-xylene, n-hexane, n-octylamine, octadecanoic acid, octyl amine acetate, oleic acid, oleylamine, o-xylene, phenol, polyethylene glycol (PEG400), propionic acid, propylene glycol, propylene glycol monomethyl ether, p-xylene, toluene, triethyl phosphate, triethylene glycol, xylene sulfonic acid, paraffin, mineral oil, trichloroethylene, perchloroethylene, ethyl acetate, amyl acetate, butyl acetate, methanol, ethanol, isopropanol, and higher molecular weight alcohols such as amyl alcohol, tetrahydrofurfuryl alcohol, hexanol, octanol, etc. ethylene glycol, propylene glycol, glycerine, N-methyl-2-pyrrolidinone, and the like. Water is generally the carrier of choice for the dilution of concentrates.

A broad range of surface-active agents are advantageously employed in both said liquid and solid compositions, especially those designed to be diluted with carrier before application. The surface-active agents can be anionic, cationic, non-ionic or polymeric in character and can be employed as emulsifying agents, wetting agents, suspending agents or for other purposes. Typical surface active agents include salts of alkyl sulfates, such as diethanolammonium lauryl sulphate; alkylarylsulfonate salts, such as calcium dodecylbenzenesulfonate; alkylphenol-alkylene oxide addition products, such as nonylphenol-C.sub. 18 ethoxylate; alcohol-alkylene oxide addition products, such as tridecyl alcohol-C.sub. 16 ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly utilized in agricultural compositions include crystallisation inhibitors, viscosity modifiers, suspending agents, spray droplet modifiers, pigments, antioxidants, foaming agents, light-blocking agents, compatibilizing agents, antifoam agents, sequestering agents, neutralising agents and buffers, corrosion inhibitors, dyes, odorants, spreading agents, penetration aids, micronutrients, emollients, lubricants, sticking agents, and the like. The compositions can also be formulated with liquid fertilizers or solid, particulate fertiliser carriers such as ammonium nitrate, urea and the like.

According to the present invention, there is provided the use of the synergistic fungicidal composition described above, for the control of powdery mildew on roses.

### EXAMPLES

### Example 1

Three separate trials were set up to assess the pest severity (percentage infected leaf area) and percentage control of powdery mildew, *Sphaerotheca pannosa* (compared to the untreated control) for various rates of penconazole alone, fenpropidin alone, and mixtures of fenpropidin and penconazole. Treatment with dodemorph acetate (in the form of Meltatox™ 400EC) was used as a positive control, and untreated plants were included as a negative control.

In each trial 40 greenhouse rose plants (v. Grand Prix) were planted for each treatment, and grown until flowering. The level of natural powdery mildew disease pressure was monitored regularly. Once the pressure was high enough (after appearance of several spots of infection on the leaves indicating the onset of infection), three successive spray applications of fungicide at approximately 5 day intervals were made according to the treatments specified for each trial below, and powdery mildew infection was assessed at regular intervals, starting on the day of the first treatment.

To assess powdery mildew infection, 25 young fully expanded leaves were selected at random from the middle of each plot. Powdery mildew infection was then assessed on the upper side of each leaf using a visual assessment. The data was used to calculate the percentage infected leaf area (as a measurement of pest severity), and the percentage control of powdery mildew relative to the untreated control.

### 1.1 Trial 1

Fungicidal treatments for trial 1 were made on 12 January, 17 January and 23 January. The treatments used in the trial were:
1: Untreated (negative control)
2: Dodemorph acetate 1g/L (250ml Meltatox™ 400EC in 100L water) positive control
3: Penconazole 50mg/L (50ml Topas™ in 100L water)
4: Fenpropidin 131mg/L (17.5ml Mildin™ in 100L water)
5: Fenpropidin 131mg/L + penconazole 50mg/L (17.5ml Mildin™ and 50ml Topas™ in 100L water).

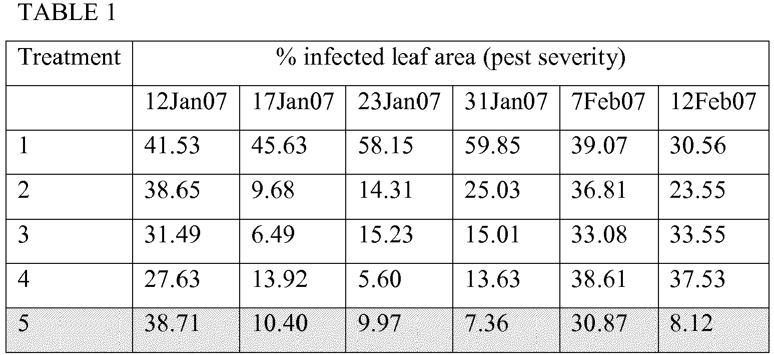

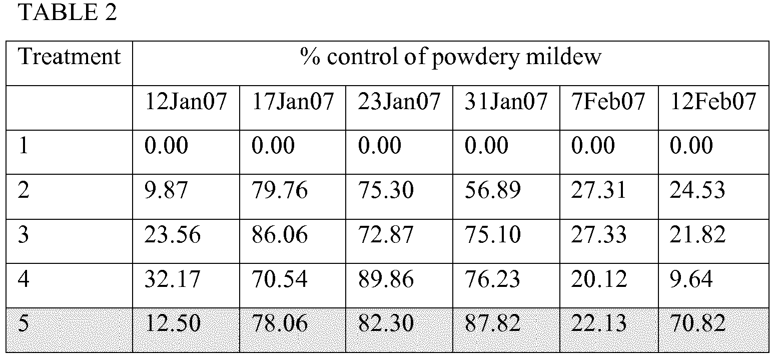

After the third spray, disease control is maintained by treatment 5 for at least 2-3 weeks, compared with only about 1 week with treatments 3 and 4. The level of powdery mildew control on 12 February is much lower for treatment 5 than for all other treatment. This data demonstrates that mixtures of fenpropidin and penconazole (treatment 5) provide longer lasting disease protection than either the positive control (treatment 2), or than each fungicide used alone (treatments 3 and 4).

### 1.2 Trial 2

Fungicidal treatments for trial 2 were made on 23 February, 28 February and 6 March. The treatments used in the trial were:
1: Untreated (negative control)
2: Dodemorph acetate 1g/L (250ml Meltatox™ 400EC in 100L water) positive control
3: Penconazole 50mg/L (50ml Topas™ in 100L water)
4: Fenpropidin 131mg/L (17.5ml Mildin™ in 100L water)
5: Fenpropidin 131mg/L + penconazole 50mg/L (17.5ml Mildin™ and 50ml Topas™ in 100L water)
6: Fenpropidin 263mg/L (35ml Mildin™ in 100L water).

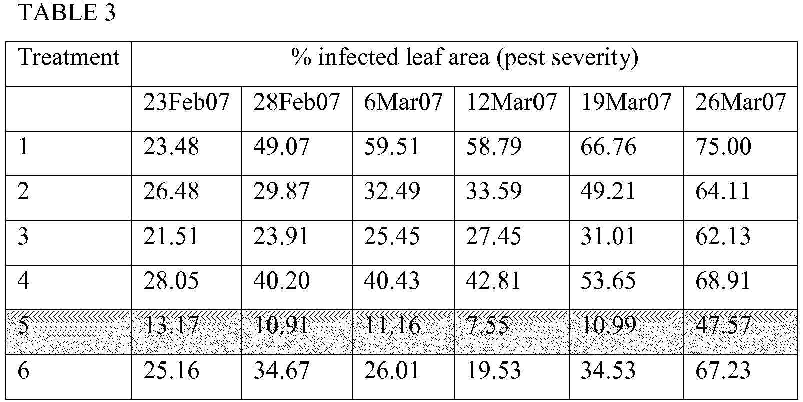

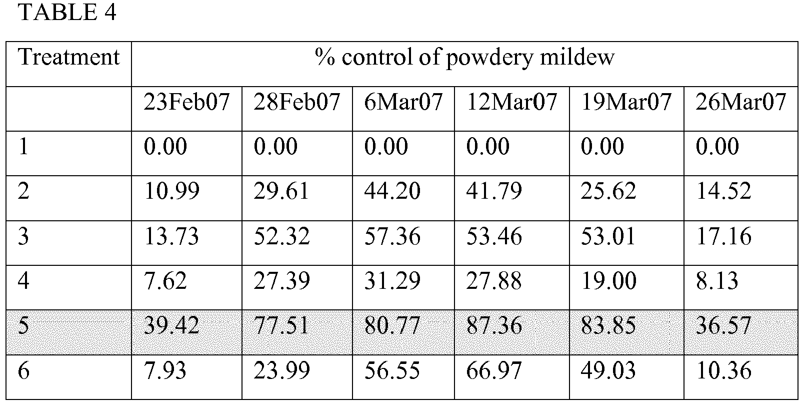

Disease control for treatment 5 is much better than for all other treatments at every time point assessed during this trial. This demonstrates that mixtures of fenpropidin and penconazole provide much more effective, faster acting, and longer-lasting disease control than each of these fungicides used alone.

### 1.3 Trial 3

Fungicidal treatments for trial 3 were made on 18 April, 25 April and 1 May. The treatments used in the trial were:
1: Untreated (negative control)
2: Dodemorph acetate 1g/L (250ml Meltatox™ 400EC in 100L water) positive control
3: Penconazole 50mg/L (50ml Topas™ in 100L water)
4: Fenpropidin 131mg/L (17.5ml Mildin™ in 100L water)
5: Fenpropidin 263mg/L (35ml Mildin™ in 100L water)
6: Fenpropidin 525mg/L (70ml Mildin™ in 100L water)
7: Fenpropidin 131mg/L + penconazole 50mg/L (17.5ml Mildin™ and 50ml Topas™ in 100L water)
8: Fenpropidin 263mg/L + penconazole 50mg/L (35ml Mildin™ and 50ml Topas™ in 100L water).

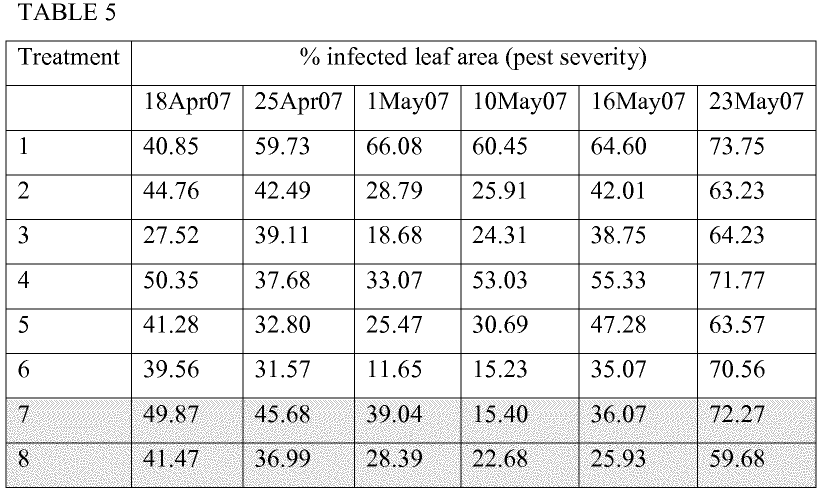

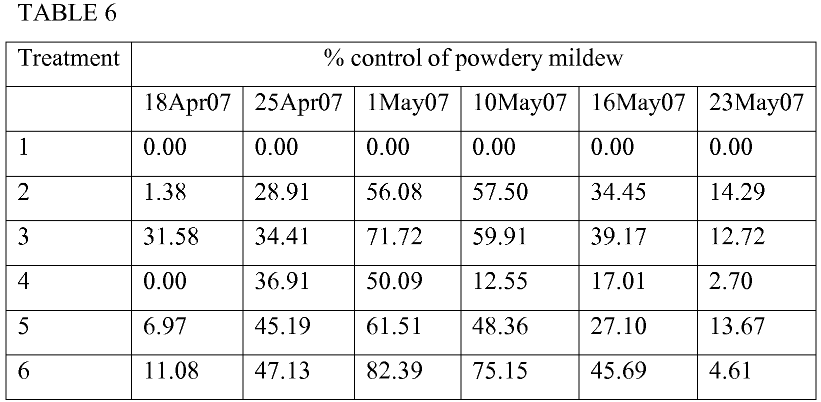

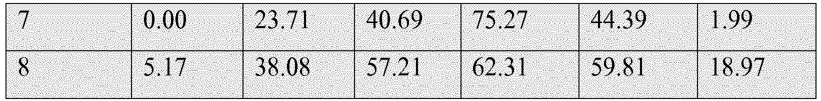

Roses treated with treatment 6 exhibited phytotoxicity symptoms on the leaves. This data shows that mixtures of fenpropidin and penconazole provide excellent control of powdery mildew.

### 1.4 Trial 4

Fungicidal treatments for trial 4 were made on 15 August, 21 August and 29 August. The treatments used in the trial were:
1: Untreated (negative control)
10 2: Dodemorph acetate 1g/L (250ml Meltatox™ 400EC in 100L water) positive control
3: Penconazole 50mg/L (50ml Topas™ in 100L water)
4: Fenpropidin 131mg/L (17.5ml Mildin™ in 100L water)
5: Fenpropidin 131mg/L + penconazole 50mg/L (17.5ml Mildin™ and 50ml Topas™ in 100L water)
6: Fenpropidin 263mg/L + penconazole 50mg/L (35ml Mildin™ and 50ml Topas™ in 100L water).

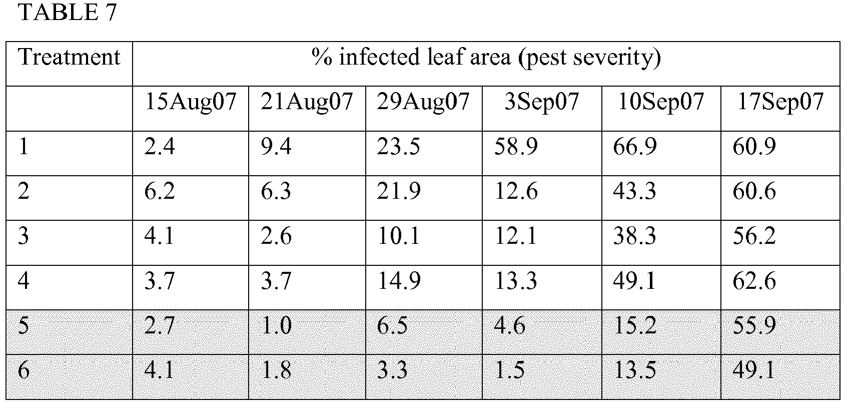

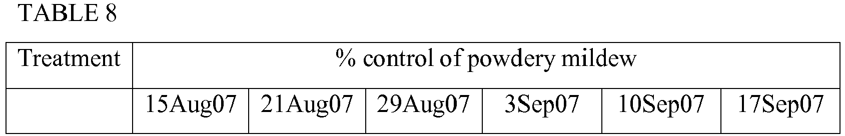

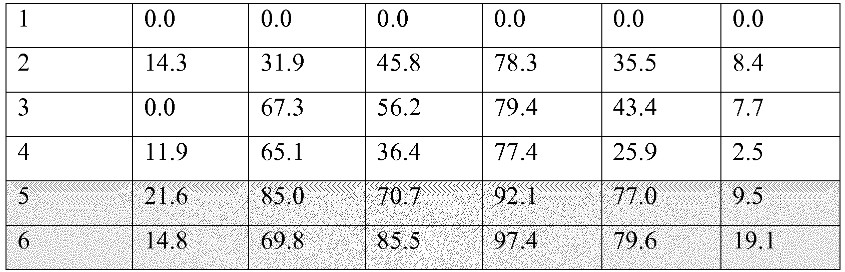

Treatments 5 and 6 perform better than all other treatments. This data shows that mixtures of fenpropidin and penconazole provide more efficacious control of *Sphaerotheca pannosa,* for a longer period of time than each fungicide used alone.

### Example 2: Crop safety trials in Holland

### 2.1 Trials during the winter

The following trials were conducted in Holland during the winter period / dark season, when the total light radiation level is less than 2000 W/m² per day. Table 9 below lists the treatments used:

**TABLE 9: Treatments**

| Treatment | AI | Formulation | PCZ rate (ga/hl) | FPD rate (ga/hl) |
|---|---|---|---|---|
| 7 | None (untreated control) | n/a | 0 | 0 |
| 8 | Penconazole | 100EC | 5 | 0 |
| 9 | Penconazole | 100EC | 10 | 0 |
| 10 | Fenpropidin | 750EC | 0 | 13.125 |
| 11 | Fenpropidin | 750EC | 0 | 26.25 |
| 12 | Penconazole and fenpropidin | Tank mix | 5 | 13.125 |
| 13 | Penconazole and fenpropidin | Tank mix | 5 | 26.25 |
| 14 | Penconazole and fenpropidin | Pre-formulated (362.5 EC*) | 5 | 13.125 |
| 15 | Penconazole and fenpropidin | Pre-formulated (362.5 EC*) | 10 | 26.25 |

| | | | | |
|---|---|---|---|---|
| * Formulation components: 26.25 % w/v fenpropidin; 10% w/v penconazole; 5.5% w/v gamma-butyrolactone; 7% w/v Euulsogen EL360; 5% w/v Nansa EVM63/B; rest (to 100% w/v) K-Flex DP. | | | | |

These treatments were applied to 8 different rose varieties, and phytotoxicity assessments made at 7 day intervals. A phytotoxicity score of greater than 2.0% indicates unacceptable phytotoxicity; a score of 1.0 to 2.0% is acceptable (but not ideal); a score of less than 1.0% is good.

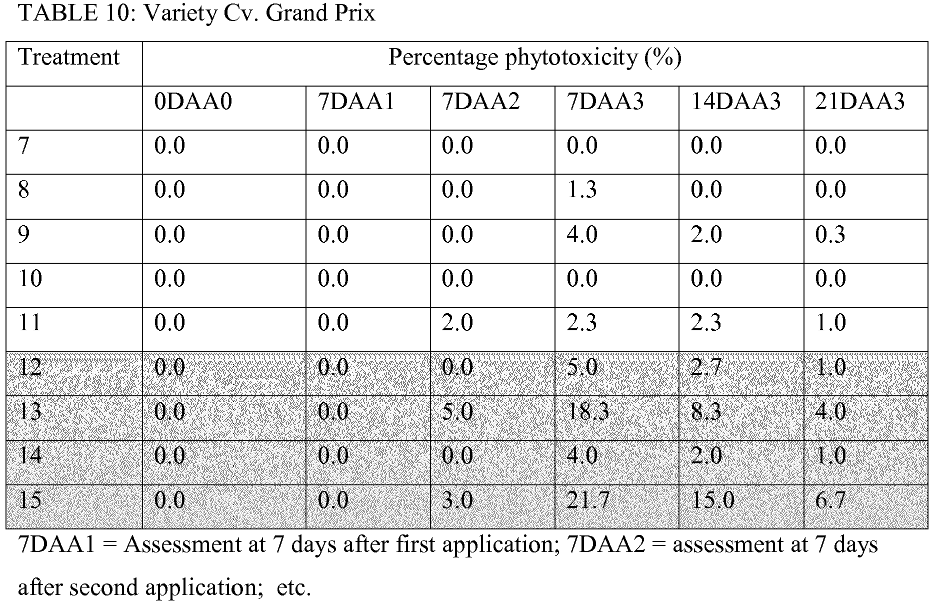

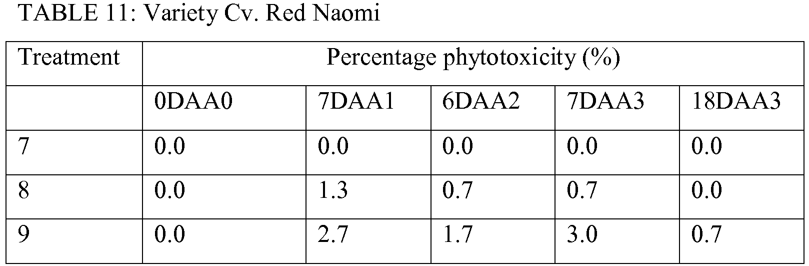

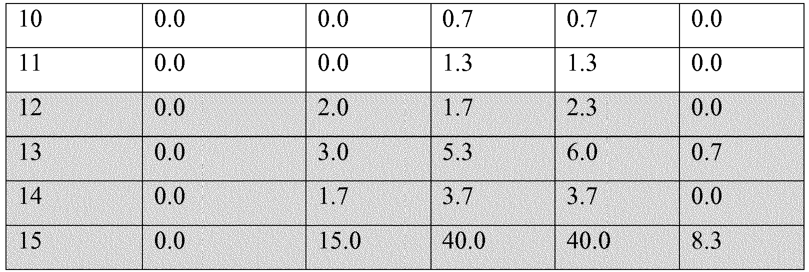

Both tank mix and pre-formulated mixtures of fenpropidin and penconazole resulted in unacceptably high levels of phytotoxicity against both Cv. Grand Prix and Cv. Red Naomi in all treatments, especially when applied at higher rates and after multiple applications. Note that the higher rates tested, and multiple applications, are preferred for best efficacy of powdery mildew control.

Similar results, with high levels of phytotoxicity were obtained on the following varieties when tested during the winter / dark season in Holland: Cv. Haiti, Cv. Starfire, Cv. Caress, Cv. Avalanche, and Cv. Vendela.

### 2.2 Trials during the summer

Corresponding trials were conducted using selected treatments from table 9 above, in Holland in April, when the total light radiation level is above 2000 W/m² per day. The results are shown below.

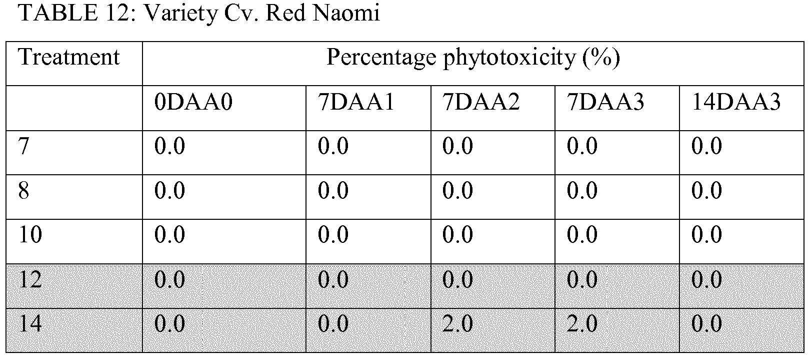

### Example 3: Efficacy and crop safety trials in Colombia

Mixtures of fenpropidin and penzonazole were tested for efficacy against powdery mildew, and for phytotoxicity in trials in Colombia, where the total light radiation level is, on average, from 4,000 to 5,000 W/m² per day. The results are shown below:

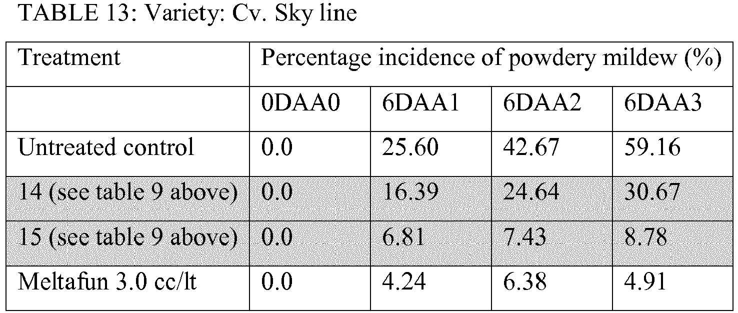

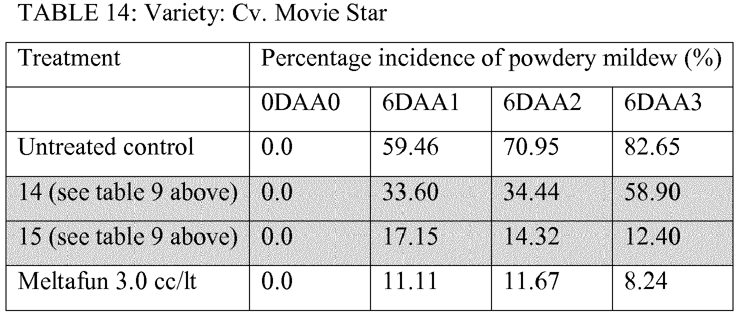

**No phytotoxicity** was observed in any of the trials.

The results show that the higher application rate of a pre-formulated mixture of fenpropidin and penconazole (treatment 15) is effective at controlling powdery mildew, with comparable efficacy to existing commercial product, meltafun, without causing phytotoxicity.

Similar results of efficacy and phytotoxicity were obtained for all other rose varieties tested in Colombia: Cv. Vendela, Cv. Osiana, Cv. Orange, Cv. Lina, and Cv. Freedon.

### Example 4: Efficacy and crop safety trials in Kenya

Mixtures of fenpropidin and penzonazole were tested for efficacy against powdery mildew, and for phytotoxicity in trials in Kenya, where the total light radiation level is, on average, from 4,000 to 5,000 W/m² per day. The results are shown below:

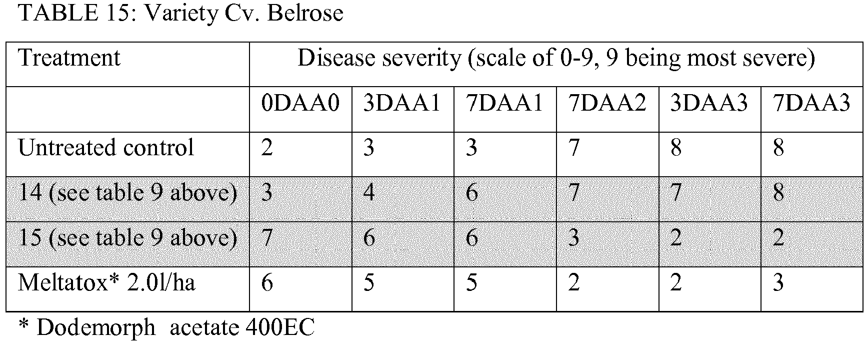

Assessments of burning, crinkling, discoloration, and puckering were made for the leaves, flowers and stems to check for phytotoxicity. No phytotoxicity was observed in any of the treatments.

Treatment 15 showed good efficacy of disease control, especially following the second application, without causing phytotoxicity.

Similar results were obtained for all other rose varieties tested in Kenya: Cv. Calibra, Cv. C.Prophyta, Cv. Duo Unique, Cv. Valentino, Cv. Viva, Cv. Electra, Cv. C. Collection, Cv. Samoa, Cv. Akito, and Cv. Dream.

## Claims

1. A method for controlling powdery mildew on ornamental and/or vegetable plants, comprising applying a composition comprising fenpropidin at a rate of between 100mg/L and 300mg/L and penconazole at a rate of between 20mg/L and 100mg/L to the plants, wherein the plants are growing in conditions having an average of at least 2000 W/m² total light radiation per day and/or an average light intensity of at least 10,000 lux.

2. A method according to claim 1, wherein fenpropidin and penconazole are present in the composition in a ratio of from 1:10 to 10:1.

3. A method according to claim 2, wherein fenpropidin and penconazole are present in the composition in a ratio of from 1:2 to 1:6.

4. A method according to claim 3, wherein fenpropidin and penconazole are present in the composition in a ratio of 1:2.6.

5. A method according to claim 1, wherein fenpropidin is present in the composition at a rate of 131mg/L.

6. A method according to any of the preceding claims, wherein the ornamental plants are roses.

7. A method according to claim 1, wherein the composition comprises a further fungicide.

8. A synergistic fungicidal composition comprising fenpropidin at a rate of between 100mg/L and 300mg/L and penconazole at a rate of between 20mg/L and 100mg/L, that is suitable for controlling powdery mildew on ornamental and/or vegetable plants that are growing in conditions having an average of at least 2000 W/m² total light radiation per day and/or an average light intensity of at least 10,000 lux, without causing phytotoxicity to the plants.

9. A synergistic fungicidal composition according to claim 8, wherein the fenpropidin and penconazole are present in a ratio of 1:2.6.

10. A synergistic fungicidal composition according to claim 8, wherein fenpropidin is present in the composition at a rate of 131mg/L.

11. A synergistic fungicidal composition according to claim 8, wherein penconazole is present in the composition at a rate of 50mg/L.

12. A synergistic fungicidal composition according to claim 8, wherein the composition comprises a further fungicide.

## Patentansprüche

1. Verfahren zur Bekämpfung von Echtem Mehltau an Zierpflanzen und/oder Gemüsepflanzen, bei dem man eine Zusammensetzung, die Fenpropidin in einer Konzentration zwischen 100 mg/l und 300 mg/l und Penconazol in einer Konzentration zwischen 20 mg/l und 100 mg/l auf die Pflanzen appliziert, wobei die Pflanzen unter Bedingungen mit durchschnittlich mindestens 2000 W/m² Gesamtlichtstrahlung pro Tag und/oder einer durchschnittlichen Lichtintensität von mindestens 10 000 Lux wachsen.

2. Verfahren nach Anspruch 1, wobei Fenpropidin und Penconazol in einem Verhältnis von 1:10 bis 10:1 in der Zusammensetzung vorliegen.

3. Verfahren nach Anspruch 2, wobei Fenpropidin und Penconazol in einem Verhältnis von 1:2 bis 1:6 in der Zusammensetzung vorliegen.

4. Verfahren nach Anspruch 3, wobei Fenpropidin und Penconazol in einem Verhältnis von 1:2,6 in der Zusammensetzung vorliegen.

5. Verfahren nach Anspruch 1, wobei Fenpropidin in einer Konzentration von 131 mg/l in der Zusammensetzung vorliegt.

6. Verfahren nach einem der vorhergehenden Ansprüche, wobei es sich bei den Zierpflanzen um Rosen handelt.

7. Verfahren nach Anspruch 1, wobei die Zusammensetzung ein weiteres Fungizid umfasst.

8. Synergistische fungizide Zusammensetzung, die Fenpropidin in einer Konzentration zwischen 100 mg/l und 300 mg/l und Penconazol in einer Konzentration zwischen 20 mg/l und 100 mg/l umfasst, die sich für die Bekämpfung von Echtem Mehltau an Zierpflanzen und/oder Gemüsepflanzen, die unter Bedingungen mit durchschnittlich mindestens 2000 W/m² Gesamtlichtstrahlung pro Tag und/oder einer durchschnittlichen Lichtintensität von mindestens 10 000 Lux wachsen, eignet, ohne dass Phytotoxizität an den Pflanzen verursacht wird.

9. Synergistische fungizide Zusammensetzung nach Anspruch 8, wobei das Fenpropidin und Penconazol in einem Verhältnis von 1:2,6 vorliegen.

10. Synergistische fungizide Zusammensetzung nach Anspruch 8, wobei Fenpropidin in einer Konzentration von 131 mg/l in der Zusammensetzung vorliegt.

11. Synergistische fungizide Zusammensetzung nach Anspruch 8, wobei Penconazol in einer Konzentration von 50 mg/l in der Zusammensetzung vorliegt.

12. Synergistische fungizide Zusammensetzung nach Anspruch 8, wobei die Zusammensetzung ein weiteres Fungizid umfasst.

## Revendications

1. Méthode de contrôle de l'oïdium sur des plantes ornementales et/ou légumières, comprenant l'application d'une composition comprenant de la fenpropidine à un taux compris entre 100 mg/l et 300 mg/l, et du penconazole à un taux compris entre 20 mg/l et 100 mg/l, aux plantes, **caractérisée en ce que** les plantes poussent dans des conditions ayant une moyenne d'au moins 2000 W/m² de rayonnement lumineux total par jour et/ou une intensité lumineuse moyenne d'au moins 10 000 lux.

2. Méthode selon la revendication 1, **caractérisée en ce que** la fenpropidine et le penconazole sont présents dans la composition selon un rapport allant de 1:10 à 10:1.

3. Méthode selon la revendication 2, **caractérisée en ce que** la fenpropidine et le penconazole sont présents dans la composition selon un rapport allant de 1:2 à 1:6.

4. Méthode selon la revendication 3, **caractérisée en ce que** la fenpropidine et le penconazole sont présents dans la composition selon un rapport de 1:2,6.

5. Méthode selon la revendication 1, **caractérisée en ce que** la fenpropidine est présente dans la composition selon un taux de 131 mg/l.

6. Méthode selon l'une quelconque des revendications précédentes, **caractérisée en ce que** les plantes ornementales sont des roses.

7. Méthode selon la revendication 1, **caractérisée en ce que** la composition comprend un autre fongicide.

8. Composition fongicide synergique, comprenant de la fenpropidine à un taux compris entre 100 mg/l et 300 mg/l, et du penconazole à un taux compris entre 20 mg/l et 100 mg/l, qui est convenable pour le contrôle de l'oïdium sur des plantes ornementales et/ou légumières qui sont cultivées dans des conditions ayant une moyenne d'au moins 2000 W/m² de rayonnement lumineux total par jour et/ou une intensité lumineuse moyenne d'au moins 10 000 lux, sans provoquer de phytotoxicité aux plantes.

9. Composition fongicide synergique selon la revendication 8, **caractérisée en ce que** la fenpropidine et le penconazole sont présents selon un rapport de 1:2,6.

10. Composition fongicide synergique selon la revendication 8, **caractérisée en ce que** la fenpropidine est présente dans la composition selon un taux de 131 mg/l.

11. Composition fongicide synergique selon la revendication 8, **caractérisée en ce que** le penconazole est présent dans la composition selon un taux de 50 mg/l.

12. Composition fongicide synergique selon la revendication 8, **caractérisée en ce que** la composition comprend un autre fongicide.
